# EUROPÄISCHE PATENTANMELDUNG

(11) **EP 4 640 486 A1**
(43) Veröffentlichungstag der Anmeldung: **29.10.2025**
(21) Anmeldenummer: 25172058.7
(22) Anmeldetag: 23.04.2025
(51) Int. Cl.: B60P 3/00, A47K 3/32, B60P 3/34, B60P 3/36, B60R 15/02, B60R 15/04, E04B 1/343

(54) **KOMPAKTE SANITÄRKABINE**

(30) Priorität: 25.04.2024 DE 102024111721; 15.10.2024 DE 102024129890
(71) Anmelder: Kompanja GmbH & Co. KG, 50321 Brühl (DE)
(72) Erfinder: DIEFENBACH, Ulrich, 50935 Köln (DE)
(74) Vertreter: Patentanwälte Bauer Vorberg Kayser

(57) **Zusammenfassung**

Die Erfindung betrifft eine kompakte Sanitärkabine (20), insbesondere für ein Fahrzeug. Diese weist ein erstes Raumelement (22) und ein zweites Raumelement (24) auf, von denen zumindest ein Raumelement (22, 24) in horizontaler Richtung derart bewegbar ist, dass in einer ersten Nutzposition ein erster begehbarer Raum und in einer zweiten Nutzposition ein zweiter begehbarer Raum ausgebildet ist. Die Grundfläche des zweiten begehbaren Raums in der zweiten Nutzposition übersteigt die Grundfläche des ersten begehbaren Raums in der ersten Nutzposition.

## Beschreibung

Die Erfindung betrifft eine Sanitärkabine, die sich insbesondere für den Bereich der mobilen Unterkünfte, wie Wohnwagen und Wohnmobile, eignet.

Angesichts der wachsenden Popularität des mobilen Reisens steht die Branche ständig vor der Herausforderung, die Raumökonomie innerhalb dieser Fahrzeuge zu optimieren, insbesondere hinsichtlich der Funktionalität und des Komforts der eingebauten Sanitärkabinen.

In der Gestaltung von Sanitärkabinen, besonders in Bereichen mit beschränktem Platzangebot wie Wohnwagen, Wohnmobilen oder auch in kleinen Wohnungen und Tiny Houses, werden verschiedene technische Konzepte und innovative Lösungsansätze verfolgt, um die Toilette und die Dusche raumsparend unterzubringen. Diese Ansätze zielen darauf ab, den verfügbaren Raum maximal effizient zu nutzen, ohne dabei den Komfort oder die Funktionalität zu beeinträchtigen.

Oftmals wird der Raum als Dusche und Toilettenbereich kombiniert. Die Toilette, das Waschbecken und die Dusche befinden sich im selben Raum, oft ohne trennende Elemente. Der Raum ist aber verhältnismäßig klein.

Technische Varianten sehen vor, dass Teile der Einrichtung wie das Waschbecken oder die Toilette weggeklappt oder versenkt werden können, wenn sie nicht in Gebrauch sind. Dadurch wird Platz für die Duschnutzung freigegeben. Nach dem Duschen können diese Elemente wieder hervorgeholt werden.

Manche Hersteller bieten komplette Sanitärmodule an, die als eigenständige Kabinen in einem Wohnraum integriert werden können. Diese sind oft so konzipiert, dass sie eine Toilette und eine Dusche in einem sehr kompakten Format bieten, indem sie vertikal oder horizontal den Raum optimal nutzen. Diese Module können auch maßgeschneiderte Lösungen enthalten, die speziell für den jeweiligen Raum entworfen wurden.

Die EP 1 318 048 B1, die DE20 2019 002 703 U1 und die EP 2 813 394 A1 beschreiben beispielsweise Nasszellen, die in jeweils ihrem Innenbereich eine verlagerbare oder verschiebbare Trennwand aufweisen, um dadurch die Raumverhältnisse im Innern der Nasszelle verändern zu können. Beispielsweise ist möglich, die Nasszelle in einer ersten Stellung der Trennwand als Waschraum und/oder WC und einer zweiten Stellung als Duschkabine zu nutzen. Alternativ kann das Platzangebot auch zur Bereitstellung eines Ankleideraums genutzt werden.

Die EP 3 156 282 A1 beschreibt eine Lösung, bei der der gesamte Nassbereich innerhalb eines Wohnmobils verschiebbar ausgeführt ist. Daraus ergibt sich der Vorteil, dass wechselseitig der Wohnbereich dann vergrößert und gleichzeitig der nicht benötigte Schlafbereich verkleinert werden kann, wenn es gewünscht ist.

Die Aufgabe der Erfindung besteht darin, eine weitere vorteilhafte Ausführungsvariante einer Sanitärkabine, die insbesondere für mobile Fahrzeuge geeignet ist, vorzuschlagen.

Gelöst wird die Aufgabe durch ein Sanitärkabine mit den Merkmalen des Patentanspruchs 1.

Demnach weist die Sanitärkabine ein erstes Raumelement und ein zweites Raumelement auf, von denen zumindest ein Raumelement in horizontaler Richtung derart bewegbar ist, dass in einer ersten Nutzposition ein erster begehbarer Raum und in einer zweiten Nutzposition ein zweiter begehbarer Raum ausgebildet sind, wobei die Grundfläche des zweiten begehbaren Raums in der zweiten Nutzposition die Grundfläche des ersten begehbaren Raums in der ersten Nutzposition übersteigt.

Prinzipiell wird also das bewegbare Raumelement ähnlich einer Schublade verschoben, wodurch der Innenraum der Sanitärkabine vergrößert bzw. verkleinert wird. Beide Raumelemente weisen Seitenwände auf, die sich im zusammengeschobenen Zustand im Wesentlichen in Deckung befinden. Anders ausgedrückt vergrößert sich der Innenraum dadurch, dass die in der ersten Nutzposition nebeneinander bzw. sich in Deckung befindenden Seitenwände auseinandergezogen werden, wodurch sich die Tiefe des Raumes der Sanitärkabine um die Breite der verschiebbaren Seitenwände vergrößert.

Das erste Raumelement ist vorzugsweise fest installiert, beispielsweise an den Wänden oder in den Einrichtungen eines Fahrzeugs, insbesondere eines Wohnmobils oder Wohnwagens. Das zweite Raumelement ist dagegen beweglich gelagert, vorzugsweise über Rollen und/oder Schienen, wobei die Schienen aber auch als Gleitschienen ausgeführt sein können, in den auch andere Gleitelemente außer Rollen geführt sein können.

Die Führungsmittel für die Bewegung des zweiten Raumelements können am Boden, an der Decke oder auch an Einbauten dazwischen angeordnet sein. Vorteilhafterweise können an einem der beiden Raumelemente Gleit- oder Führungsschienen im Bereich der Seitenwände vorgesehen sein, in denen geeignete und am jeweils anderen Raumelement gelagerte Gleitelemente verschiebbar geführt sind. Um ein möglichst stabiles und gut geführtes Verschieben des zweiten Raumelements zu gewährleisten, können beispielsweise jeweils zwei parallel verlaufende, voneinander beabstandete Gleitschienen an den Seitenwänden vorgesehen sein, eine Gleitschiene vorzugsweise im unteren Drittel und eine Gleitschiene vorzugsweise im oberen Drittel der jeweiligen Seitenwand. Das zweite Raumelement kann zusätzlich auf mindestens einer, vorzugsweise auf zwei Rollen gelagert sein, um einerseits eine bessere Führung und anderseits dessen Eigengewicht in den Untergrund ableiten zu können, wodurch die Führungssysteme an den Seitenwänden deutlich weniger belastet werden.

Das zweite Raumelement kann also stehend gelagert sein, es kann aber auch von einer Fahrzeugdecke abhängen. Auch ist es möglich mehrere Führungen vorzusehen, also beispielsweise oben an der Decke und unten am Boden.

Vorzugsweise ist der Ausfahrweg des bewegbaren Raumelementes durch geeignete Elemente begrenzt, um ein zu weites Auseinanderziehen zu verhindern.

Zwischen den beiden Raumelementen können geeignete Dichtungen vorgesehen sein, die die beiden Raumelemente weitgehend gegeneinander abdichten. Eine vollständige Abdichtung muss nicht zwangsweise erfolgen, da sich die beiden Raumelement auch im ausgezogenen Zustand noch bereichsweise überdecken.

Grundsätzlich ist es auch möglich, dass beide Raumelemente bewegbar ausgeführt sind, was je nach Bedingungen im Fahrzeug vorteilhaft sein kann. In diesem Fall weist das erste Raumelement vorzugsweise eine Rückseite auf, wodurch die Sanitärkabine auch dann rückseitig geschlossen bleibt, wenn sie insgesamt nach vorne gezogen oder geschoben wird.

Es hat sich als besonders vorteilhaft erwiesen, wenn beide Raumelemente begehbare Bodenelemente aufweisen. Das zweite verschiebbare Raumelement weist ein Bodenelement auf, das mit dem zweiten Raumelement verbunden ist und ebenfalls aus einer ersten Position in eine zweite Position verfahrbar ist. In der ersten Position, die der ersten Nutzposition entspricht, befindet sich das Bodenelement im Wesentlichen in Deckung mit einem Bodenelement des ersten Raumelements, welches vorzugsweise ortsfest befestigt ist. Beispielsweise befindet sich das bewegbare Bodenelement in der ersten Nutzposition unterhalb des starren Bodenelements und wird mit dem zweiten Raumelement aus dieser Position herausgezogen.

Im Prinzip sind die beiden Raumelemente also miteinander verschachtelt, sie lassen sich ineinanderschieben und auseinanderziehen.

Der Zugang in die Sanitärkabine erfolgt vorzugsweise über eine Türöffnung im zweiten Raumelement. Über diese Türöffnung kann die Sanitärkabine sowohl in der ersten Nutzposition also der zweiten Nutzposition betreten und verlassen werden. Die Türöffnung kann durch eine Tür verschlossen sein.

Die beiden Raumelemente weisen in einer besonders einfachen Ausführungsvariante lediglich zwei sich vertikal erstreckende Seitenwände auf. Eine Deckenwand der Sanitärkabine kann durch die ohnehin vorhandene Decke des Fahrzeugs ausgebildet sein. Alternativ kann die Sanitärkabine aber auch eigene, vom Fahrzeug unabhängiges Deckenwände aufweisen, insbesondere wenn die Sanitärkabine als vollständiges Modul ausgebildet ist, das nachträglich in Fahrzeuge eingebaut werden kann.

Das erste feststehende Raumelement kann weiterhin eine eigene Rückwand aufweisen, die Rückwand kann aber auch durch eine bereits vorhandene Fahrzeugwand ausgebildet sein, die beiden Seitenwände sind dann lediglich an der Fahrzeugwand befestigt. Dementsprechend sind Sanitäreinrichtungen oder Möbel, wie beispielsweise Regale oder Schränke, beispielsweise entweder an der zusätzlichen Rückwand des feststehenden ersten Raumelements oder an der Fahrzeugwand vorgesehen.

Der erfindungsgemäße Sanitärkabine eignet sich insbesondere für eine Kombination eines Toilettenraums mit einem Duschraum. In der kleineren ersten Nutzposition dient die Sanitärkabine lediglich als Toilette, in der zweiten vergrößerten Nutzposition kann diese als Dusche genutzt werden. Denkbar ist aber auch, dass keine Duschmöglichkeit vorgesehen ist, sondern das erste feststehende Raumelement derart knapp bemessen ist, dass es minimalen Raum einnimmt. Zur Benutzung der Toilette kann das zweite bewegbar Raumelement nach vorne gezogen werden, um zusätzlichen Raum für die Toilettenbenutzung zu erzeugen.

Grundsätzlich ist die Erfindung auch für Räume, also nicht für Sanitärkabinen einsetzbar, die aus anderen Gründen verkleinert und vergrößert werden sollen.

In einer besonders vorteilhaften Ausführungsvariante weist die Sanitärkabine eine Lüftung auf. Über eine entsprechende Rohr- oder Schlauchleitung wird die Abluft vorzugsweise über einen der Fahrzeugaußenwand angeordnet Öffnung nach außen geleitet.

Vorzugsweise ist eine aktive, mit einem in einer Lüftungsöffnung oder in der Lüftungsleitung angeordneten elektrisch betriebenen Lüfter versehene Lüftung vorgesehen, die die Sanitärkabine entlüftet.

In einer weiteren vorteilhaften Ausführungsvariante ist eine Luftzufuhr in die Sanitärkabine vorgesehen, über die der Innenraum des Sanitärkabine über Warmluft beheizbar ist. Durch die Beheizung kann die Benutzung der Sanitärkabine angenehmer sein und die Sanitärkabine kann zum Trocknen von beispielsweise darin befindlichen Kleidungsstücken genutzt werden. Alternativ kann die Sanitärkabine auch eine Art Heizung aufweisen, beispielsweise eine wasserdichte elektrische Heizung.

Vorteilhafterweise kann eine Verriegelungsvorrichtung vorgesehen sein, die das bewegbare Raumelement verriegelt bzw. sichert, insbesondere in der eingefahrenen Position. Dies ist insbesondere deshalb notwendig und wichtig, um eine Bewegung während der Fahrt des Fahrzeugs zu verhindern. Die Verriegelungsvorrichtung kann aber auch dafür aus vorgesehen sein, die beiden Raumelemente in der zusammengeschobenen ersten Nutzposition zu verriegeln und zu sichern. Die Verriegelungsvorrichtung kann beispielsweise durch zwei Elemente gebildet sein, einen schwenkbaren Hebel, der in oder hinter ein Blockierelement eingreift und dadurch eine Relativbewegung der beiden Raumelemente zueinander verhindert. In einer besonders vorteilhaften Ausführungsvariante weist das bewegbare Raumelement einen ortsfesten Riegel auf, der in seinem in Ausschubrichtung weisenden Endbereich mit einer Nut ausgestattet ist. In diese Nut lässt sich ein am ortsfesten, nicht bewegbaren Raumelement angeordnetes Blockierelement einführen, wenn sich das bewegbare Raumelement in der eingeschobenen ersten Nutzposition befindet. Um das bewegbare Raumelement aus der ersten Nutzposition in die zweite Nutzposition überführen zu können, wird das Blockierelement aus der Nut herausbewegt und gibt dadurch den Riegel in Ausschubrichtung frei. Der Riegel kann beispielsweise horizontal ausgerichtet sein, und das Blockierelement in etwa vertikaler Richtung bewegbar sein.

Ein wesentlicher Vorteil der Erfindung besteht auch darin, dass die Sanitärkabine als eigenständiges Modul in bereits bestehende Fahrzeuge eingebaut werden kann. Insofern ist die Sanitärkabine unabhängig vom Fahrzeugtyp, solange die äußeren Abmessungen der Sanitärkabine zum entsprechenden Fahrzeug passen.

Einzelheiten der Erfindung ergeben sich auch aus den beigefügten Zeichnungen. Die Figuren 1 - 5 zeigen ein bevorzugtes Ausführungsbeispiel der Erfindung, die nicht auf dieses beschränkt ist. Es zeigen:
- Fig. 1:: eine perspektivische Gesamtansicht einer erfindungsgemäßen Sanitärkabine im auseinandergezogenen Zustand,
- Fig. 2:: die Sanitärkabine aus Fig. 1 von vorne,
- Fig 3 a - c:: die Sanitärkabine aus Fig. 1 von der Seite in drei verschiedenen Ausfahrpositionen,
- Fig. 4:: eine Schnittansicht gemäß der Schnittlinie A-A in Figur 2,
- Fig. 5 a bis c:: die verschiedenen Positionen analog zu Figur 3 von oben,
- Fig. 6:: eine perspektivische Darstellung einer Ausführungsvariante mit Gleitschienen und Verriegelungsvorrichtung,
- Fig. 7:: die Ausführungsvariante aus Figur 6 von schräg hinten,
- Fig. 8:: die Verriegelungsvorrichtung aus Fig 6 in vergrößerter Darstellung,
- Fig. 9:: eine Unterseite einer Ausführungsvariante mit Rollen und Abfluss.

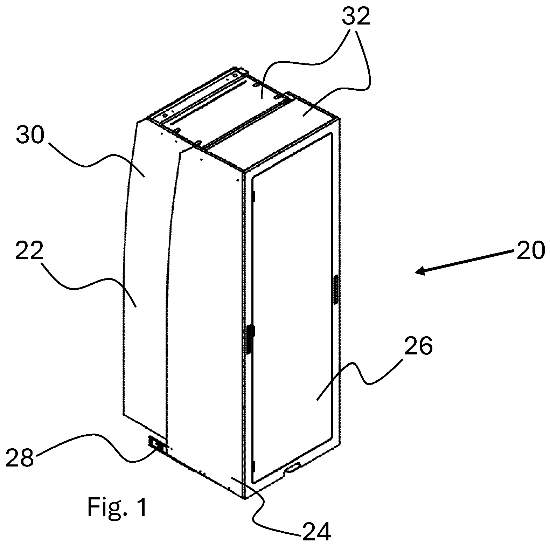

Figur 1 zeigt eine perspektivische Gesamtansicht einer Sanitärkabine 20 im auseinandergezogenen Zustand. Erkennbar sind ein erstes Raumelement 22, das vorzugsweise ortsfest im Fahrzeug installiert ist, und ein zweites Raumelement 24, welches zur Vergrößerung der Sanitärkabine 20 bewegbar ausgeführt ist. Die beiden Raumelemente 22, 24 können ineinandergeschoben und auseinandergezogen werden.

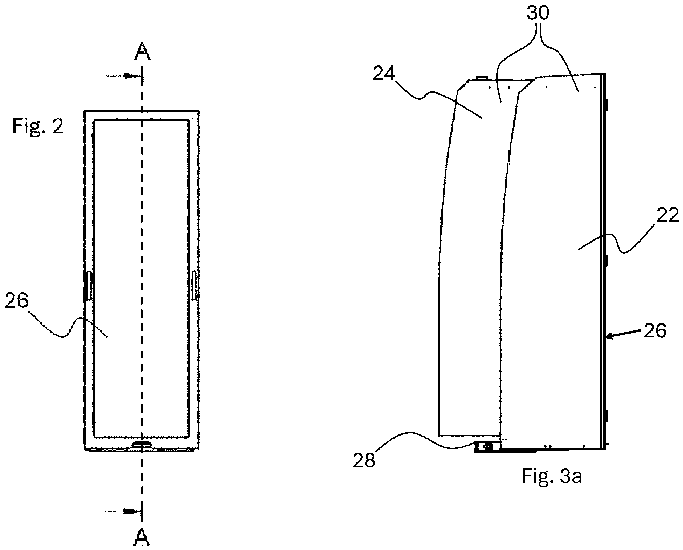

Das bewegbare zweite Raumelement 24 weist eine Türöffnung für eine Tür 26 auf, durch die die Sanitärkabine 20 betreten und wieder verlassen werden kann (vgl. auch Fig. 2, Ansicht von vorne).

Im gezeigten Ausführungsbeispiel ist das bewegbare zweite Raumelement 24 am Boden gelagert und über eine Schiene 28 verfahrbar.

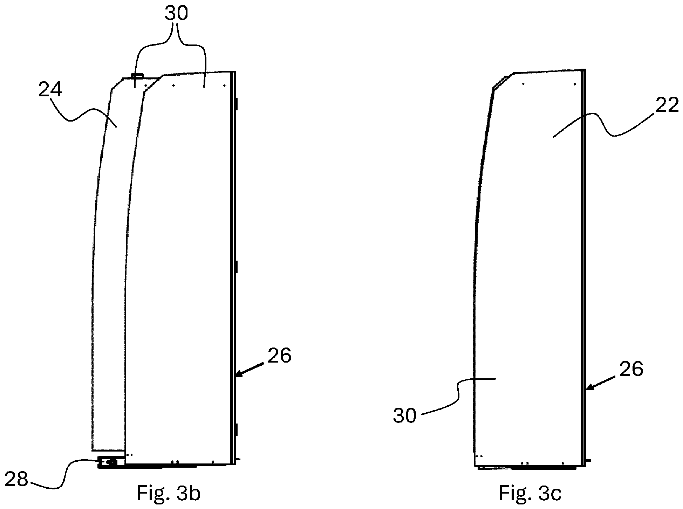

Die beiden Raumelemente 22, 24 weisen jeweils Seitenwände 30 auf, die sich im zusammengeschobenen Zustand der beiden Raumelement 22,24 weitgehend in Deckung befinden (vergleiche beispielsweise Figur 3C).

Im gezeigten Ausführungsbeispiel sind weiterhin jeweils Deckenwände 32 gezeigt, die an beiden Raumelementen 22, 24 vorgesehen sind und sich ebenfalls im zusammengeschobenen Zustand weitgehend in Deckung befinden.

Bei dem gezeigten Ausführungsbeispiel umhüllt das zweite Raumelement 24 das erste Raumelement 22, selbstverständlich ist auch eine umgekehrte Ausführung denkbar.

Figur 3 zeigt die erfindungsgemäße Sanitärkabine 20 von der Seite. Erkennbar sind die verschiedenen Ausfahrpositionen, von Figur 3a (komplett ausgefahren) bis zu Figur 3c (komplett eingefahren).

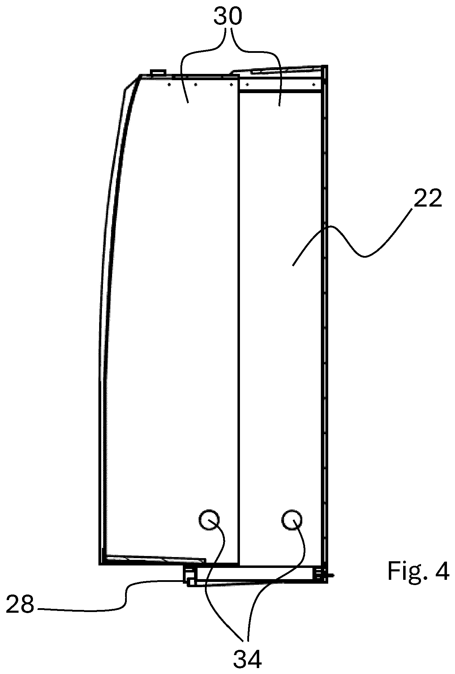

Figur 4 zeigt eine Schnittansicht gemäß der Schnittlinie A-A in Figur 2. erkennbar sind auch Lüftungsöffnungen 34, die in den Seitenwänden 30 angeordnet sind. An diese Lüftungsöffnungen 34 können Rohr oder Schlauchleitungen angeschlossen werden, über die die Sanitärkabine 20 vorzugsweise mithilfe eines entsprechend ausgeführten elektrisch betriebenen Lüfters aktiv entlüftet oder beheizt werden kann.

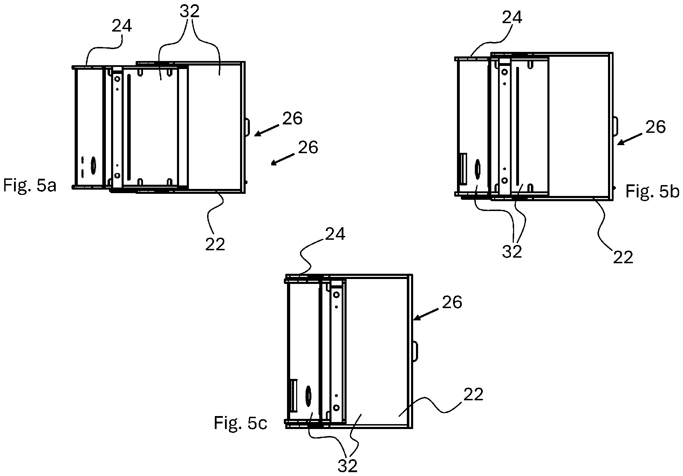

Figur 5 zeigt analog zu Figur 3 die verschiedenen Positionen von oben.

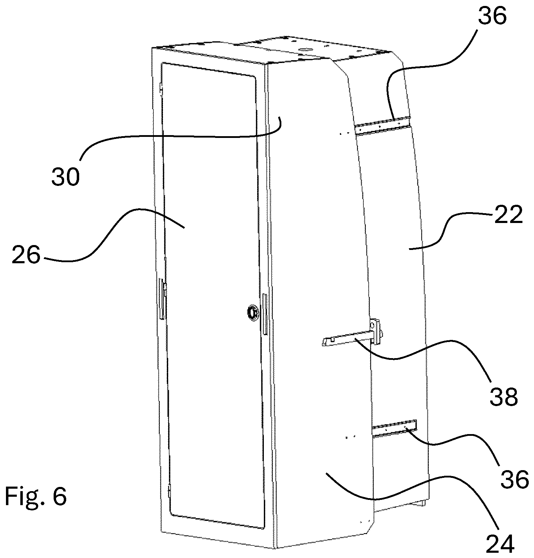

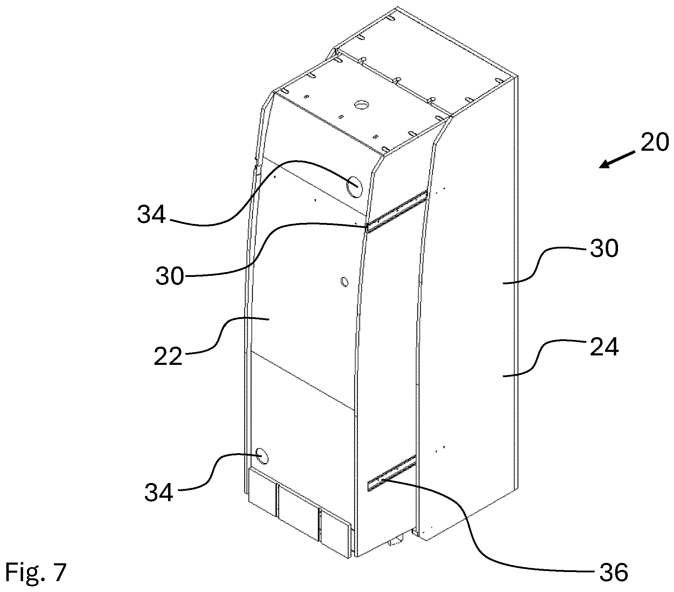

Die Figuren 6 und 7 zeigen eine Ausführungsvariante der Erfindung mit seitlichen Gleitschienen 36 und einer Verriegelungsvorrichtung 38. Gezeigt sind zwei Gleitschienen 36, die an einer Seitenwand 30 des ortsfesten ersten Raumelements 22 angeordnet sind. Eine obere Gleitschiene 36 ist im oberen Drittel des ersten Raumelements 22 und eine untere Gleitschienen 36 im unteren Drittel der Seitenwand 30 des ersten Raumelements 22 angeordnet. Anstelle der zwei gezeigten Gleitschienen 36 können noch weitere Gleitschienen 36 vorgesehen sein, insbesondere auch an der gegenüber liegenden Seitenwand 30. In den Gleitschienen 32 bewegen sich am zweiten Raumelement 24 vorgesehene nicht gezeigte Gleitelemente oder Führungsrollen.

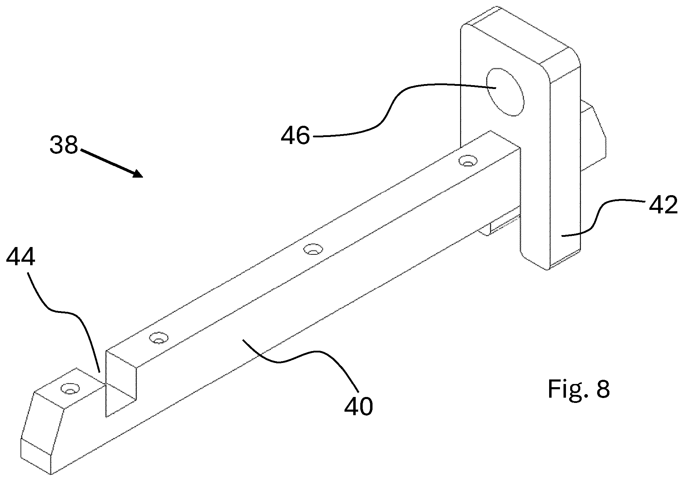

Die in Figur 6 gezeigte Verriegelungsvorrichtung 38 ist in Figur 8 nochmals vergrößert dargestellt. Ein ortsfester, am bewegbaren zweiten Raumelement 24 angeordneter Riegel 40 wirkt mit einem Blockierelement 42 zusammen. In einer nicht gezeigten Blockierstellung befindet sich das Blockierelement 42 in einer Nut 44, welche im Bereich eines in Ausschubrichtung weisenden freien Endes des Riegels 40 vorgesehen ist. Das Blockierelement 42 ist vertikal bewegbar und kann in die Nut 44 hinein und aus dieser heraus bewegt werden. Selbstverständlich sind auch andere Wirkmechanismen nutzbar, insbesondere können die beiden Elemente auch umgekehrt angeordnet sein. Auch kann ein schwenkbarer Riegel 40 vorgesehen sein, der an einem ortsfesten Blockierelement 42 festlegbar ist.

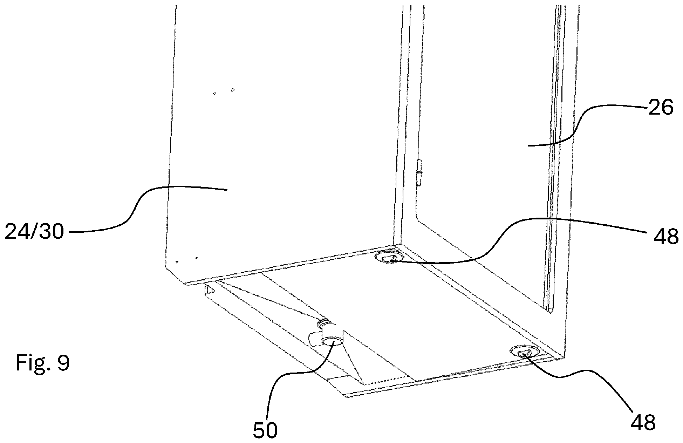

Figur 9 zeigt eine erfindungsgemäße Sanitärkabine 20 von unten. In der gezeigten Ausführungsvariante sind Rollen 48 vorgesehen, die auf einem Untergrund abrollen und somit das Verfahren des zweiten Raumelements 24 erleichtern. Weiterhin ist ein Abfluss 50 gezeigt, der im gezeigten Ausführungsbeispiel am ortsfesten ersten Raumelement 22 angeordnet ist.

Die erfindungsgemäße Sanitärkabine 20 ermöglicht selbst in einem relativ kleinen Fahrzeug bzw. einem kleinen kompakten Raum beispielsweise ein komfortables Duscherlebnis, wenn eine Dusche daran installiert ist. Das zweite Raumelement 24 kann nach dem Duschen schnell und einfach verstaubar werden, sodass der Wohn- oder Küchenbereich des Fahrzeugs wieder vollständig genutzt werden kann.

Auch wenn in der Sanitärkabine keine Dusche vorgesehen ist, nimmt die Toilettenkabine während der Nichtbenutzung nur minimalen Raum ein. Eine Toilette wird in der Regel äußerst selten genutzt, weswegen es vorteilhaft ist, den dafür notwendigen Raum während der Nichtbenutzung möglichst zu reduzieren.

### Bezugsziffern

- 20: Sanitärkabine
- 22: erste Raumelement
- 24: zweite Raumelement
- 26: Tür
- 28: Schiene
- 30: Seitenwand
- 34: Lüftungsöffnung
- 36: Gleitschiene
- 38: Verrieglungsvorrichtung
- 40: Riegel
- 42: Blockierelement
- 44: Nut
- 46: Grifföffnung
- 48: Rolle
- 50: Abfluss

## Patentansprüche

1. Sanitärkabine (20), insbesondere für ein Fahrzeug, aufweisend ein erstes Raumelement (22) und ein zweites Raumelement (24), von denen zumindest ein Raumelement (22, 24) in horizontaler Richtung derart bewegbar ist, dass in einer ersten Nutzposition ein erster begehbarer Raum und in einer zweiten Nutzposition ein zweiter begehbarer Raum ausgebildet ist, wobei die Grundfläche des zweiten begehbaren Raums in der zweiten Nutzposition die Grundfläche des ersten begehbaren Raums in der ersten Nutzposition übersteigt.

2. Sanitärkabine (20) nach Anspruch 1, **dadurch gekennzeichnet, dass** die Raumelemente (22, 24) jeweils vertikale Seitenwände (30) aufweisen, die sich im zusammengeschobenen Zustand der Raumelement (22,24) nebeneinander und im Wesentlichen in Deckung befinden.

3. Sanitärkabine (20) nach Anspruch 1 oder Anspruch 2, **dadurch gekennzeichnet, dass** die Raumelemente (22, 24) jeweils horizontale Deckenwände (32) aufweisen, die sich im zusammengeschobenen Zustand der Raumelement (22,24) übereinander und im Wesentlichen in Deckung befinden.

4. Sanitärkabine (20) nach einem der Ansprüche 1 bis 3, **dadurch gekennzeichnet, dass** die Raumelemente (22, 24) jeweils begehbare Bodenelemente aufweisen, die sich im zusammengeschobenen Zustand der Raumelement (22,24) übereinander und im Wesentlichen in Deckung befinden.

5. Sanitärkabine (20) nach einem der Ansprüche 1 bis 4, **dadurch gekennzeichnet, dass** das das bewegbare Raumelement (22, 24) auf Rollen und/oder schienengeführt ist.

6. Sanitärkabine (20) nach einem der Ansprüche 1 bis 5, **dadurch gekennzeichnet, dass** eine lösbare Verrieglungsvorrichtung vorgesehen, die eine Relativbewegung in Ausschubrichtung zwischen den beiden Raumelementen (22, 24)verhindert.

7. Sanitärkabine (20) nach einem der Ansprüche 1 bis 6, **dadurch gekennzeichnet, dass** Lüftungsöffnungen (34) vorgesehen sind, über die eine Entlüftung oder Belüftung erfolgen kann.
